(19) Europäisches Patentamt
European Patent Office
Office européen des brevets

(11) EP 1 254 546 B1

(12) **EUROPÄISCHE PATENTSCHRIFT**

(45) Veröffentlichungstag und Bekanntmachung des Hinweises auf die Patenterteilung:
**08.02.2006 Patentblatt 2006/06**

(21) Anmeldenummer: **00974556.3**

(22) Anmeldetag: **17.11.2000**

(51) Int Cl.:
***H04L 27/26*** *(2006.01)* ***H04H 1/00*** *(2006.01)*
***H04N 7/24*** *(2006.01)*

(86) Internationale Anmeldenummer:
**PCT/EP2000/011437**

(87) Internationale Veröffentlichungsnummer:
**WO 2001/060005 (16.08.2001 Gazette 2001/33)**

(54) **VERFAHREN ZUM BESTIMMEN DER RESTTRÄGERLEISTUNG BEI EINEM NACH DEM DVB-T-STANDARD IM 8K-MODUS QAM-MODULIERTEN MULTITRÄGERSIGNAL**

METHOD FOR DETECTING THE RESIDUAL CARRIER POWER ON A MULTI-CARRIER SIGNAL THAT IS QAM-MODULATED IN THE 8K MODE ACCORDING TO THE DVB-T-STANDARD

PROCEDE DE DETERMINATION DE LA PUISSANCE DES PORTEURS RESTANTE POUR UN SIGNAL MULTIPORTEUR A MODULATION D'AMPLITUDE EN QUADRATURE, EN MODE 8K, SELON LA NORME DVB-T

(84) Benannte Vertragsstaaten:
**AT BE CH CY DE DK ES FI FR GB GR IE IT LI LU MC NL PT SE TR**

(30) Priorität: **07.02.2000 DE 10005287**

(43) Veröffentlichungstag der Anmeldung:
**06.11.2002 Patentblatt 2002/45**

(73) Patentinhaber: **Rohde & Schwarz GmbH & Co. KG**
**81671 München (DE)**

(72) Erfinder:
- **BALZ, Christoph**
  **81543 München (DE)**
- **LIDL, Christina**
  **80798 München (DE)**

(74) Vertreter: **Körfer, Thomas et al**
**Mitscherlich & Partner,**
**Patent- und Rechtsanwälte,**
**Sonnenstrasse 33**
**80331 München (DE)**

(56) Entgegenhaltungen:
**EP-A- 0 991 239** **DE-A- 19 920 999**

- **BALZ C: "EFFIZIENTE ERMITTLUNG VON QUALITAETSPARAMETERN QUADRATURAMPLITUDENMODULIERTER SIGNALE BEIM DIGITALEN FERNSEHEN (DVB)" FERNSEH UND KINOTECHNIK,VDE VERLAG GMBH. , Bd. 50, Nr. 5, 1. Mai 1996 (1996-05-01), Seiten 249-252, XP000592205 BERLIN,DE ISSN: 0015-0142**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 254 546 B1

Printed by Jouve, 75001 PARIS (FR)

**Beschreibung**

Die Erfindung betrifft ein Verfahren zum Bestimmen der Restträgerleistung bei einem nach dem DVB-T-Standard in 8K-Modus QAM modulierten Multiträgersignal.

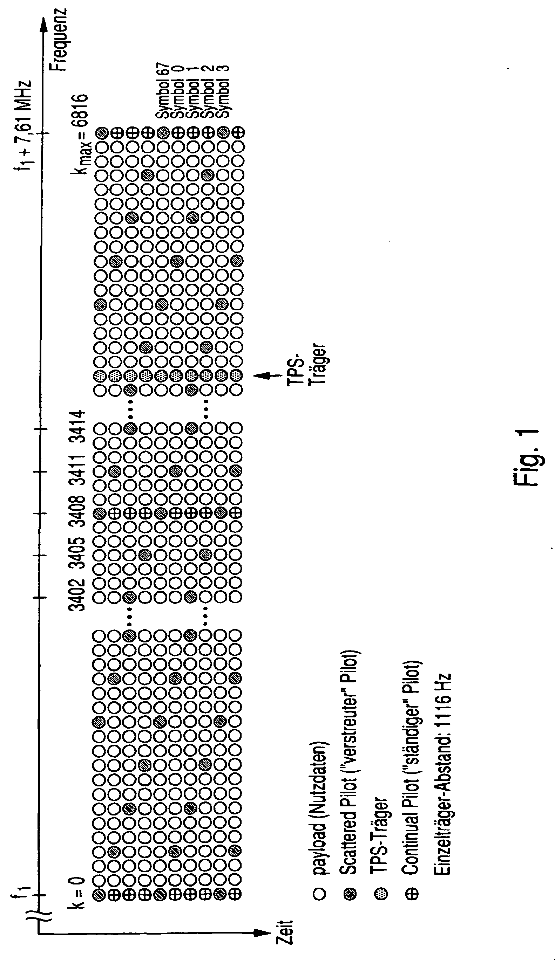

Der sogenannte DVB-T-Standard beschreibt ein Multiträger-Signal, dessen die Nutzdaten beinhaltende Einzelträger QAM-moduliert sind, beispielsweise QPSK-, 16-QAM- oder 64-QAM-moduliert. Die Anzahl der verwendeten und mit k numerierten Einzelträger ist abhängig vom Modus der eingesetzten Fouriertransformation (FFT). Im 2K-Modus ist beispielsweise k = 0 bis 1704, im 8K-Modus ist k = 0 bis 6816. Die Gesamtheit aller innerhalb eines festen Zeitbereiches gesendeten Einzelträger wird als Symbol bezeichnet, wie dies Figur 1 zeigt. Innerhalb dieses Trägerbereiches sind einige der Träger mit zusätzlichen Informationen über den verwendeten FFT-Modus, der QAM-Ordnung etc. 2PSKmoduliert, diese Träger werden als TPS-Träger (Transmission Parameter Signalling) bezeichnet.

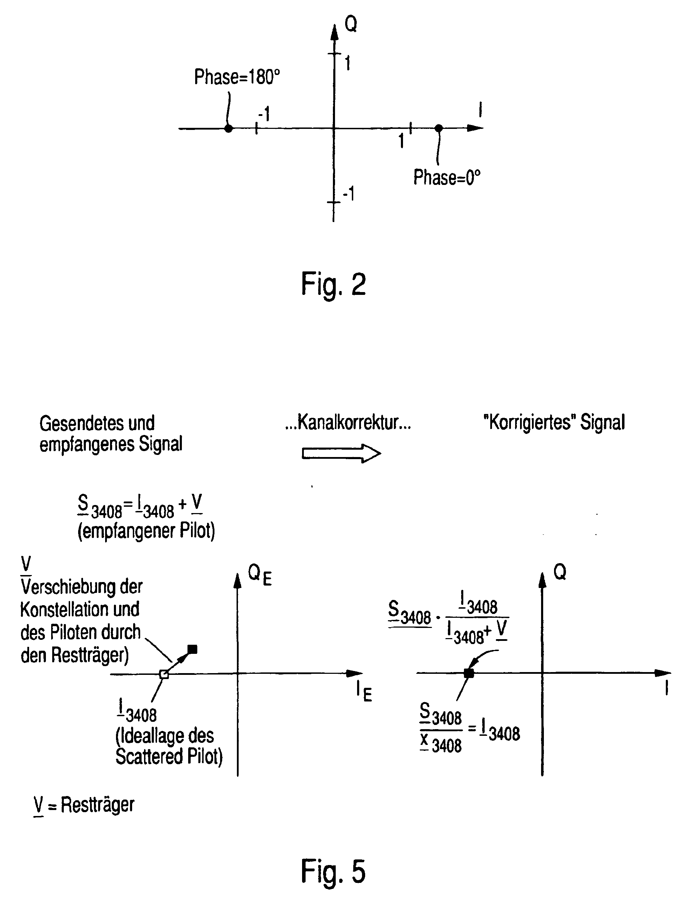

Zusätzlich sind zahlreiche unmodulierte Einzelträger (Pilote) vorhanden, die eine um den Faktor 4/3 höhere Amplitude im Vergleich zum quadratischen Mittel der Amplituden der bereits genannten Trägerarten und eine starre Phase von 0° bzw. 180° aufweisen, wie dies das Konstellationsdiagramm nach Figur 2 zeigt. Die Phasenlage wird durch eine Pseudo-Zufallszahl aus einer PRBS (Pseudo Random Binary Sequence) bestimmt. Diese Pilote werden als ständige Pilote (Continual Pilots) bezeichnet, sie befinden sich an festen Trägerpositionen und dienen zur Grobeinstellung der Frequenz des Lokaloszillators im Empfänger.

Ebenfalls mit erhöhter Amplitude und einer starren Phase von 0° bzw. 180° werden die sogenannten verstreuten Pilote (Scattered Pilots) gesendet. Diese sind über den Trägerbereich gleichmäßig verteilt und wechseln ihre Position innerhalb des Trägerbereiches von einem Symbol zum nächsten, wie dies Figur 1 zeigt. Durch Interpolation dieser verstreuten Pilote entlang der Frequenz- und Zeitachse ist eine Kanalschätzung an den Trägerpositionen k möglich und diese durch Interpolation gewonnene Information kann dann für eine Kanalkorrektur eines gestörten DVB-T-Signals verwendet werden. Anhand der Konstellation eines oder mehrerer QAMmodulierter Einzelträger können verschiedene Übertragungsparameter abgeleitet werden, die eine Beurteilung der Qualität des Signals getrennt nach kanalspezifischen Parametern (z.B. Signal-Rausch-Abstand) und senderseitig hervorgerufenen Einflüssen (z.B. Restträger oder Quadraturfehler) ermöglichen.

Es gibt Messempfänger, mit denen alle relevanten Messungen an QAM-Signalen für DVB durchgeführt werden können (BALZ C: "Effiziente Ermittlungen von Qualitätsparametern Quadraturamplitudenmodulierter Signale beim digitalen Fernsehen (DVB)").

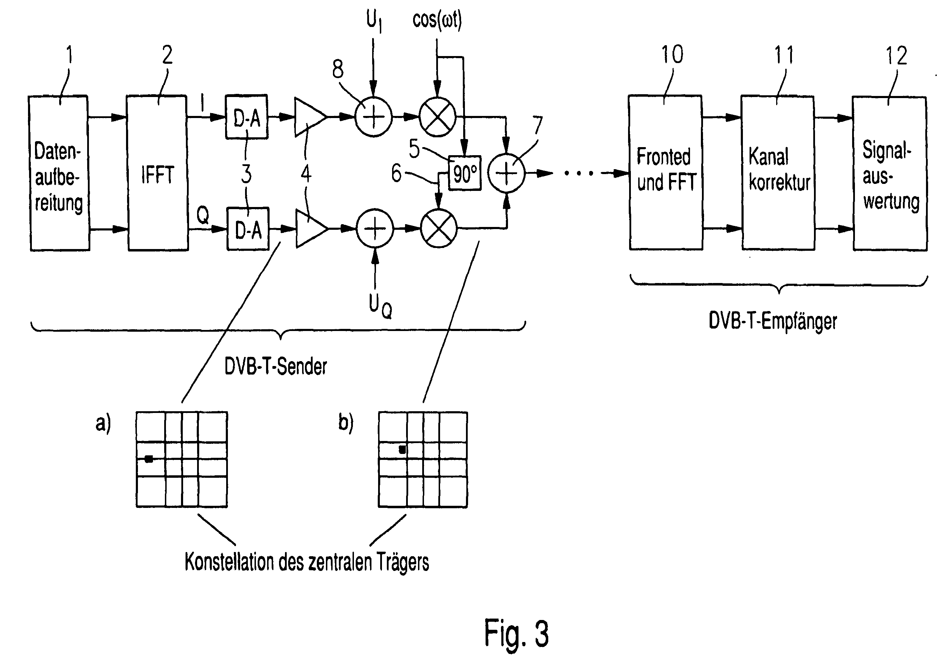

Figur 3 zeigt den Prinzipaufbau einer Sender-Empfänger-Strecke eines nach dem DVB-T-Standard arbeitenden Systems. In einer Datenaufbereitungsstufe 1 werden die zu übertragenden digitalen Videosignale im Frequenzbereich aufbereitet und anschließend durch inverse Fouriertransformation (IFFT) in den Zeitbereich umgerechnet (Rechner 2). Die so erzeugten I- und Q-Anteile werden nach Digitalisierung in D/A-Wandlern 3 und Verstärkung in Verstärkern 4 einem Quadraturmischer 6 zugeführt, in welchem sie mit den um 90° gegeneinander phasenverschobenen Anteilen eines Trägersignals 5 auf die gewünschte Ausgangsfrequenz hochgemischt und in einem Addierer7 wieder zusammengefaßt und abgestrahlt werden.

Im Empfänger erfolgt eingangsseitig wieder in der Eingangsstufe 10 eine Rückumsetzung des empfangenen Eingangssignals aus dem Zeitbereich in den Frequenzbereich über FFT, anschließend wird in einer Korrekturstufe 11 die erwähnte Kanalkorrektur mit Hilfe der verstreuten Pilote durch Interpolation durchgeführt, d.h. die empfangenen verstreuten Pilote werden so korrigiert, daß sie empfangsseitig in der I/Q-Ebene jeweils die Ideallage nach Figur 2 einnehmen. In einer anschließenden Signalauswerteinrichtung 12 werden die empfangenen Videosignale weiterverarbeitet.

Durch einen senderseitigen Gleichspannungsanteil $U_I$ bzw. $U_Q$, wie dies schematisch in Figur 3 durch die Addierer 8 angedeutet ist, kann ein störender Restträger entstehen, durch den die Konstellation speziell des zentralen Trägers eines DVB-T-Signals verschoben wird, wie dies in Figur 3b angedeutet ist (Figur 3a ist die Idealkonstellation des zentralen Trägers). Der zentrale Träger liegt bei einem Multiträgersignal dieser Art im Basisband bei der Frequenz Null. Er liegt beim 2K-Modus bei k = 852 und beim 8K-Modus bei k = 3408. Beim 2K-Modus ist dieser zentrale Träger mit Nutzdaten moduliert und stellt nur zeitweise einen verstreuten Piloten dar, es kann an ihm also unmittelbar die Restträgerleistung bestimmt werden, wie dies in der am 12. April 2001 veröffentlichten OS 199 48 383.3 beschrieben ist. Bei einem 8K-Modus ist der zentrale Träger nicht moduliert und zeitweise ein ständiger Pilot bzw. ein verstreuter Pilot. An ihm kann also nicht unmittelbar der Restträger ermittelt werden.

Es ist daher Aufgabe der Erfindung, ein Verfahren aufzuzeigen, mit dem auch auf einfache Weise bei einem im 8K-Modus arbeitenden DVB-T-Multiträgersignal die Restträgerleistung am zentralen Träger bestimmt werden kann.

Diese Aufgabe wird durch ein Verfahren gemäß Anspruch 1 oder Anspruch 4 gelöst. Besonders vorteilhafte Möglichkeiten für eine praktische Realisierung hierfür ergeben sich aus den Unteransprüchen.

Durch Auswertung des Einflusses der Restträgerleistung auf einen dem zentralen Träger benachbarten Träger kann also gemäß der Erfindung auch bei einem DVB-T-Multiträgersignal, das im 8K-Modus QAM-moduliert ist und bei dem also der zentrale Träger selbst unmoduliert bleibt, die Restträgerleistung des zentralen Trägers bestimmt und angezeigt werden. Dazu ist lediglich ein üblicher Meßempfänger erforderlich.

Die Erfindung wird im Folgenden anhand schematischer Zeichnungen an zwei Ausführungsbeispielen näher erläutert.

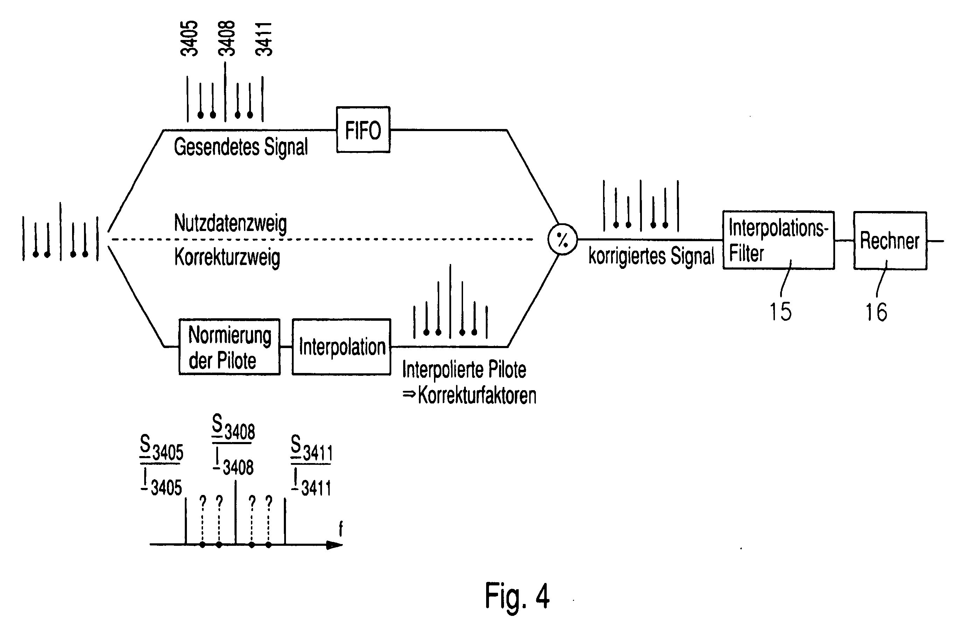

Beim DVB-T-Standard nach der Norm ETS300744 befindet sich in einem Übertragungsrahmen an jeder dritten Trägerposition ein verstreuter Pilot, wie dies Figur 1 zeigt. Die dazwischenliegenden Träger sind reine Nutzdaten-Träger. Mit Hilfe dieser verstreuten Pilote kann ein gestörtes DVB-T-Signal durch ein in Figur 4 dargestelltes Verfahren korrigiert werden. Dadurch werden auch die dazwischenliegenden Nutzdatenträger korrigiert. Das in Figur 4 dargestellte Korrektursystem besteht aus einem Korrekturzweig und einem Nutzdatenzweig. Im Korrekturzweig werden die Pilote des ankommenden Multiträgersignals zunächst normiert, d.h. jeder einzelne empfangene verstreute Pilot $S_k$ wird durch seine ideale Lage $I_k$ dividiert. In einem ungestörten Signal erscheinen also alle verstreuten Pilote mit einer Amplitude von 1 und einer Phasenlage von 0°.

Bei einem 8K-Modus-Multiträgersignal besitzt der zentrale Träger die Position k = 3408, wie dies Figur 1 und Figur 4 zeigen. Angenommen, ein ankommendes Signal in Figur 4 ist nur durch einen Restträger V gestört und sonst durch keine anderen Einflüsse, so befinden sich alle Träger vor der Kanalkorrektur in Ideallage und nur der zentrale Träger mit der Position k = 3408 ist durch den Restträger gestört. Durch die anschließende Kanalkorrektur im Interpolationsfilter des Korrekturzweiges nach Figur 4 werden in bekannter Weise durch Interpolation zwischen den verstreuten Piloten für die dazwischenliegenden Träger/Korrekturfaktoren ermittelt, mit denen die im Nutzdatenzweig übertragenen Träger dann in einer Addierstufe korrigiert werden. Durch die Korrektur werden beispielsweise die benachbarten Träger k = 3406 mit einem komplexen Korrekturfaktor $x_{3406}$ multipliziert, der Träger k = 3407 mit einem komplexen Korrekturfaktor $x_{3407}$, der Träger k = 3409 mit einem komplexen Korrekturfaktor $x_{3409}$ usw.. Dies führt zu einer Drehung und Stauchung der jeweiligen Konstellation um ihren Mittelpunkt. Wenn jedoch der Interpolationsalgorithmus des Korrekturzweiges bekannt ist, kann durch Ermitteln des komplexen Korrekturfaktors $x_k$ eines benachbarten Trägers auf den Korrekturfaktor $x_{3408}$ des zentralen Trägers rückgeschlossen werden und auf diese Weise die Restträgerleistung V (Amplitude) bestimmt werden. Es ist also nur erforderlich, über ein zusätzliches Interpolationsfilter 15 gemäß Figur 4, das die gleichen Eigenschaften aufweist wie das Interpolationsfilter des Korrekturzweiges, aus den korrigierten Trägern die zuvor im Korrekturzweig ermittelten Korrekturfaktoren $x_k$ der dem zentralen Träger benachbarten Träger zu ermitteln und durch Interpolation den Korrekturfaktor $x_{3408}$ des zentralen Trägers zu berechnen. So kann beispielsweise über den rückgewonnenen Korrekturfaktor $x_{3407}$ des unmittelbar benachbarten Nutzdatenträgers 3407 durch den gleichen bekannten Interpolationsalgorithmus, wie er im Korrekturzweig nach Figur 2 angewendet wurde, der komplexe Korrekturfaktor $x_{3408}$ des zentralen Trägers in einem Rechner 16 bestimmt werden und daraus dann der den zentralen Träger verschiebende Restträger V berechnet werden, wie dies schematisch Figur 5 zeigt.

Unter der Annahme, daß das Multiträgersignal ausschließlich durch einen Restträger gestört ist, gilt für den empfangenen zentralen Träger vor der Kanalkorrektur:

$$S_{3408} = I_{3408} + V$$

mit $S_{3408}$ = empfangenes Signal des zentralen Trägers,
$I_{3408}$ = Ideallage des zentralen Trägers als verstreuter Pilot, und
V = Verschiebung durch den Restträger.

Ferner gilt:

$$I_{3408} = S_{3408}/x_{3408}$$

$x_{3408}$ ist der durch die Kanalkorrektur bestimmte Korrekturfaktor.

Damit ergibt sich der komplexe Restträger wie folgt:

$$V = I + Q = I_{3408}\,(x_{3408} - 1)$$

wobei $I_{3408}$ die vorgegebene bekannte Ideallage des zentralen Trägers ist.

Eine andere Möglichkeit zur Bestimmung des Restträgers im 8K-Modus besteht in der Auswertung der verstreuten Pilote vor der in Figur 2 dargestellten Kanalkorrektur. Dabei wird davon ausgegangen, daß eine Störung im Kanal sowohl den zentralen Träger als auch diesen unmittelbar benachbarte verstreute Pilote in gleicher Weise beeinfluß. Durch Bestimmung der Amplitude eines dem zentralen Träger benachbarten verstreuten Piloten kann also durch Differenzbildung der Restträger ermittelt werden, der unmittelbar dem zentralen Träger (k = 3408) benachbarte verstreute Pilot besitzt die Position 3405 bzw. 3411, wie dies in Figur 1 eingezeichnet ist. Unter der Annahme, daß das Signal wieder nur durch einen Restträger gestört ist, ergibt sich, daß dieser auf den verstreuten Piloten beispielsweise k = 3405 keinen störenden Einfluß hat, sondern nur auf den zentralen Träger 3408. Damit kann durch Differenzbildung der Restträger ermittelt werden.

$$V = S_{3408} - S_{3405}$$

Bezogen auf den benachbarten verstreuten Piloten 3405 ist der Restträger V wie folgt definiert: :

$$\frac{V}{S_{3405}} = \frac{S_{3408}}{S_{3405}} - 1$$

Dabei ist die unterschiedliche Phasenlage der einzelnen verstreuten Pilote zu beachten. Während die beiden dem zentralen Träger unmittelbar benachbarten verstreuten Pilote 3405 und 3411 eine Phasenlage von 180°, also die gleiche Phasenlage wie der zentrale Träger, besitzen, haben die beiden nächstfolgenden verstreuten Pilote 3402 und 3414 eine Phasenlage von 0°. Dies muß beim Vorzeichen $\pm$ 1 in obiger Formel entsprechend berücksichtigt werden.

## Patentansprüche

1. Verfahren zum Bestimmen der Restträgerleistung bei einem nach dem DVB-T-Standard im 8K-Modus QAM-modulierten Multiträgersignal, das einen in der Mitte der Einzelträger liegenden zentralen Träger aufweist, der zeitweise ein kontinuierlicher und zeitweise ein verstreuter Pilot ist,
wobei der Einfluß der Restträgerleistung auf einen dem zentralen Träger benachbarten Träger bestimmt und auf den zentralen Träger umgerechnet wird.

2. Verfahren nach Anspruch 1, bei dem durch einen Interpolationsalgorithmus durch Auswertung der verstreuten Piloten des Multiträgersignals für die einzelnen Träger Korrekturfaktoren ermittelt werden, mit denen eine Kanalkorrektur aller Träger des Multiträgersignals durchgeführt wird,
wobei aus dem kanalkorrigierten Multiträgersignal der Korrekturfaktor mindestens eines dem zentralen Träger direkt oder indirekt benachbarten Nutzdaten-Trägers rückgewonnen und daraus durch Interpolation der komplexe Korrekturfaktor des zentralen Trägers bestimmt wird und daraus dann die Restträgerleistung berechnet wird.

3. Verfahren nach Anspruch 2,
wobei aus der vorgegebenen Ideallage des zentralen Trägers und seinem zugehörigen komplexen Korrekturfaktor die komplexe Restträgerleistung berechnet wird.

4. Verfahren zum Bestimmen der Restträgerleistung bei einem nach dem DVB-T-Standard im 8K-Modus QAM-modulierten Multiträgersignal, das einen in der Mitte der Einzelträger liegenden zentralen Träger aufweist, der zeitweise ein kontinuierlicher und zeitweise ein verstreuter Pilot ist,
wobei noch vor einer Kanalkorrektur des Multiträgersignals die komplexe Leistung des zentralen Trägers sowie eines diesem benachbarten verstreuten Piloten ermittelt wird und daraus durch Bildung der Differenz die Restträgerleistung bestimmt wird.

5. Verfahren nach Anspruch 4,
wobei die Restträgerleistung auf den benutzten benachbarten verstreuten Piloten bezogen wird.

## Claims

1. Method for determining the residual carrier power in a QAM-modulated multi-carrier signal in the 8K mode according to the DVB-T standard, which has a central carrier, lying in the middle of the individual carriers, which is sometimes a continual pilot and sometimes a scattered pilot,
wherein
the influence of the residual carrier power on a carrier neighbouring the central carrier is determined and then converted with respect to the central carrier.

2. Method according to Claim 1, in which, using an interpolation algorithm and by evaluation of the scattered pilots of the multi-carrier signal, correction factors, with which a channel correction of all the carriers of the multi-carrier signal is carried out, are identified for the individual carriers,
wherein
the correction factor of at least one user-data carrier directly or indirectly neighbouring the central carrier is recovered from the channel-corrected multi-carrier signal, and the complex correction factor of the central carrier is determined therefrom by interpolation, and then the residual carrier power is calculated therefrom.

3. Method according to Claim 2,
wherein
the complex residual carrier power is calculated from the predetermined ideal position of the central carrier and its associated complex correction factor.

4. Method for determining the residual carrier power in a QAM-modulated multi-carrier signal in the 8K mode according to the DVB-T standard, which has a central carrier, lying in the middle of the individual carriers, which is sometimes a continual pilot and sometimes a scattered pilot,
wherein
even before a channel correction of the multi-carrier signal, the complex power of the central carrier as well as of a scattered pilot neighbouring the latter are identified, and the residual carrier power is determined therefrom by subtraction.

**5.** Method according to Claim 4, wherein the residual carrier power is expressed in terms of the neighbouring scattered pilots which are used.

## Revendications

**1.** Procédé de détermination de la puissance de porteuse résiduelle pour un signal multiporteuse, modulé QAM en mode 8K selon la norme DVB-T, qui présente une porteuse centrale située au centre des porteuses individuelles qui est parfois un pilote continu et parfois un pilote dispersé, dans lequel l'influence de la puissance de porteuse résiduelle sur une porteuse adjacente à la porteuse centrale est déterminée et convertie pour la porteuse centrale.

**2.** Procédé selon la revendication 1, dans lequel un algorithme d'interpolation permet par l'évaluation des pilotes dispersés du signal multiporteuse de déterminer des facteurs de correction pour les porteuses individuelles, facteurs avec lesquels une correction de canal de toutes les porteuses du signal multiporteuse est effectuée, dans lequel, à partir du signal multiporteuse ayant subi une correction de canal, le facteur de correction d'au moins une porteuse de données utiles directement ou indirectement adjacente à la porteuse centrale est récupéré, et à partir de celui-ci, le facteur de correction complexe de la porteuse centrale est déterminé par interpolation, et partir de celui-ci, la puissance de porteuse résiduelle est alors calculée.

**3.** Procédé selon la revendication 2, dans lequel la puissance de porteuse résiduelle complexe est calculée à partir de la position idéale prédéterminée de la porteuse centrale et de son facteur de correction complexe associé.

**4.** Procédé de détermination de la puissance de porteuse résiduelle pour un signal multiporteuse, modulé QAM en mode 8K selon la norme DVB-T, qui présente une porteuse centrale située au centre des porteuses individuelles qui est parfois un pilote continu et parfois un pilote dispersé, dans lequel, même avant une correction de canal du signal multiporteuse, la puissance complexe de la porteuse centrale ainsi que d'un pilote dispersé adjacent à celle-ci est déterminée, et à partir de celle-ci, la puissance de porteuse résiduelle est déterminée par soustraction.

**5.** Procédé selon la revendication 4, dans lequel la puissance de porteuse résiduelle se rapporte au pilote dispersé adjacent utilisé.

Frequenz
$f_1 + 7{,}61$ MHz
$k_{max} = 6816$
Symbol 67
Symbol 0
Symbol 1
Symbol 2
Symbol 3
TPS-Träger
3402 3405 3408 3411 3414
$f_1$
k = 0
Zeit
payload (Nutzdaten)
Scattered Pilot ("verstreuter" Pilot)
TPS-Träger
Continual Pilot ("ständiger" Pilot)
Einzelträger-Abstand: 1116 Hz

Fig. 1

Q
1
Phase=180°
-1
I
1
Phase=0°
-1

Fig. 2

Gesendetes und
empfangenes Signal
...Kanalkorrektur...
"Korrigiertes" Signal
S 3408 = I 3408 + V
(empfangener Pilot)
V
Verschiebung der
Konstellation und
des Piloten durch
den Restträger)
Q E
I E
I 3408
(Ideallage des
Scattered Pilot)
Q
S 3408 · I 3408 / (I 3408 + V)
I
S 3408 / X 3408 = I 3408
V = Restträger

Fig. 5

1
Daten-aufbe-reitung
2
IFFT
I
Q
D-A
3
4
8
$U_I$
$U_Q$
cos(ωt)
90°
5
6
7
10
Fronted und FFT
11
Kanal korrektur
12
Signal-aus-wertung
DVB-T-Sender
DVB-T-Empfänger
a)
b)
Konstellation des zentralen Trägers


Fig. 3

3405
3408
3411
Gesendetes Signal
FIFO
Nutzdatenzweig
Korrekturzweig
Normierung der Pilote
Interpolation
Interpolierte Pilote
⇒Korrekturfaktoren
%
korrigiertes Signal
Interpolations-Filter
Rechner
15
16
S3405
I3405
S3408
I3408
S3411
I3411
? ? ? ?
f

Fig. 4